# EUROPEAN PATENT SPECIFICATION

(11) **EP 2 258 754 B1**
(45) Date of publication and mention of the grant of the patent: **09.05.2012**
(21) Application number: 10163366.7
(22) Date of filing: 20.05.2010
(51) Int. Cl.: C08J 9/00, C08K 5/5313

(54) **Polyester foam material having flame-resistant behaviour**
Polyesterschaummaterial mit flammbeständigem Verhalten
Matériau en mousse polyester résistant aux incendies

(30) Priority: 02.06.2009 EP 09007315
(43) Date of publication of application: 08.12.2010
(73) Proprietor: Armacell Enterprise GmbH, 48153 Münster (DE)
(72) Inventor: Li, Jie, 4800, Zofingen (CH); Gräter, Horst, 48155, Münster (DE)
(74) Representative: von Füner, Nicolai

(56) References cited:
- US-A- 3 014 956
- US-A- 4 280 005
- US-A- 4 288 561
- US-A1- 2004 176 506
- US-A1- 2006 074 157
- US-A1- 2007 197 696
- US-A1- 2008 188 598
- US-B1- 6 503 969

## Description

The present invention relates to an expanded polyester material having a better flame-resistant behaviour than the foamed product of polyester resins, wherein at least one of halogen-free flame retardants is added into the formulation of foamed polyester and the mixture is able to be foamed through an expansion process.

Polyester materials, particularly polyethylene terephthalate, exhibit a very high mechanical strength (compression/shear strength and modulus) and an excellent temperature resistance. Foamed polyesters can be used in many applications where light-weight and high mechanical loading are requested.

However, foamed cellular materials of polyester resin show no or poor flame-resistance, when exposed to fire. This averts applications of such foamed materials in e.g. construction, yacht or ship building, automotive, wagon building and furniture. In addition, the fire classification of polyester foam materials according to Single Burning Item (SBI, prEN 13823) is not available up to date. Therefore, fire-resistant polyester foams should be produced by foam extrusion and tested according to prEN 13823 (SBI) in the current invention.

The SBI classification of foamed polyester resins tested according to prEN 13823 is not very promising: PET foam without any flame retardancy shows e.g. a total heat release (THR₆₀₀ₛ) of 19.2MJ, a fire growth rate (FIGRA) over 745W/s and a total smoke production (TSP₆₀₀ₛ) about 349MJ (Comparable example 1).

Production of foamed polyesters is nowadays more and more practiced by a reactive process comprising upgrading or increasing of molecular weight and extensional viscosity of aromatic polyester resins during the extrusion process with help of chain-extenders such as multifunctional tetracarboxylic dianhydrides or/and polyepoxides.

The reactive extrusion to produce polyester foams is, however, a very sensitive process. The chemicals used for upgrading of polyester resins therefore also may react with chemical groups of the fire retardants and so allow only very limited reaction for the necessary polymer chain enhancement, which is essential for the foaming process.

In addition, most fire retardants can not be incorporated into the foaming process due to processing conditions of the polyester foams, which in general exceed 290°C and more than 100 bar pressures. At or even far below that high temperature and high pressure, such flame retardants start to degrade and further react. This releases water or produces substances which react with the most sorts of chain-extenders, thus interferes the reactive foaming process.

Furthermore, production of physically blown foams is very sensitive to additives others than resins, because these additives act in many cases as nucleates and result in an over nucleation, and no acceptable cell structure is achievable. Most flame retardants having a melting point above 280°C belong to this kind of additives.

On the other hand, most flame-resistant additives, which may work in process of polyester for compact products, are not necessarily feasible for the reactive foaming extrusion of polyesters.

In a series of screening trials with flame retardants (FR) which target to improve the flame behaviour of polyester foam materials, halogen-containing or -free flame retardants are added into the foaming recipes of polyester and run on a pilot extrusion line to produce foamed polyester materials.

For instance, a Br/Sb₂O₃ combination containing a brominated diphenyl derivative is tested for processability of a reactive foam extrusion by melt blending this kind of FR in form of granulates with PET and chain-extending masterbatch with a twin-screw extruder. The mixture is charged with a physical blowing agent. The addition of this Br/Sb₂O₃ containing FR even at a loading of 2wt% of the mixture leads already to a dramatic pressure decrease in the extruder so that no stable foaming process was possible.

The invention EP0908488 A1 (A1 Ghatta, H., et al.) describes flame retardant compositions comprising polyester resin and a flame retardant compound, which are extruded with help of a chain-extending additive PMDA or PMDA-containing masterbatch and physical blowing agents. The foam products containing brominated FR are tested successfully for B1 or M1 according to EP0908488. The most effective flame retardant compound (Example 3 of EP0908488) consists of 3.0wt% ethylenebistetra-bromophthalimide and 0.3wt% sodium antimonate according to the inventors. The PET foam implying this compound is classifiable with B1 according to DIN 4102, as claimed in EP0908488. This foam composition is repeated in the current invention and the trial confirmed that this PET composition is able to be foamed by a reactive extrusion. But, the SBI classification of the foamed product according to prEN 13823 is worse than the PET foam containing no FR in terms of fire growth rate (FIGRA), smoke production and max. smoke growth rate (SMOGRA) (s. Tab. 2).

Besides, the halogen-containing flame retardants used in polymers cause problems, in case of fire, recycling or disposal of wastes, such as:
1) Aggressive corrosion due to generation of aggressive gases (HCl, HBr) and formation of acids (Hydrochloric acid),
2) Toxicity due to production of toxic substances like chloric and bromine-containing dioxins, furans and other halogen-containing toxic products.

The disadvantages of halogen-containing flame retardants give motivations for searching for and application of halogen-free alternatives. One of them is phosphorus-based flame retardant compositions which form an intumescent system. In the event of fire, the intumescent systems having a phosphor content of 0.5% to 10% by weight of the mixture, preferably from 2.0% to 6.0%, form, as a result of the temperature increase, an accelerated carbonization of the polymer at the surface resulting in char-forming.

In the current invention, a series of phosphor-containing flame retardants which are currently availabe for polyester application has been reviewed through the reactive foam extrusion process. However, most of them impair the foaming process such that no polyester foam can be manufactured, e.g.:
1) Micronized aluminium tris(diethylphosphinate) even in an amount of 1% by weight of total foam composition results in a much lower pressure (about 80bar lower) in comparison to the composition containing no FR and a process instability, whereas no foamed product with fine cell is possible.
2) Addition of 2wt% oxaphospholane glycol ester shows similar process impairment like above. No acceptable PET foam can be produced.
3) Ammonium polyphosphate worsens the foam extrusion already in an amount of 1wt%, so that no PET foam is producible.
The subject-matter of the present invention is a flame-resistant, expanded cellular material from aromatic polyester resins, obtained by extrusion foaming of polyester resins, wherein
the polyester foam comprises one or a mixture of fusible zinc phosphinates of the following formula, 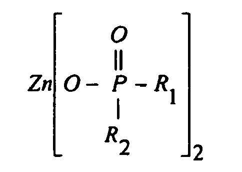 where R₁ and R₂ are identical or different and are hydrogen, C₁-C₁₈-alkyl, linear or branched, and/or aryl, preferably C₁-C₆-alkyl, linear or branched, and/or phenyl, particularly preferably methyl, ethyl, n-propyl, isopropyl, n-butyl, tert-butyl, n-pentyl or phenyl, preferably zinc dimethylphosphinate, zinc methylethylphosphinate, zinc diphenylphosphinate, zinc diethylphosphinate, zinc ethylbutylphosphinate or zinc dibutylphosphinate fusible zinc phosphinates, wherein the fusible zinc phosphinates have a melting point of 40 to 250°C, preferably a melting point above 200°C and a decomposition temperature not lower than 300°C and has a total heat release (THR₆₀₀ₛ) less than 6.0 MJ, a fire growth rate (FIGRA) less than 430.0 W/s, a total smoke production (TSP₆₀₀ₛ) less than 165.0 MJ and no flaming droplets/particles within 600s, wherein all parameters thereof are tested according to prEN 13823.

It has been surprisingly found in this invention that unlike the flame retardants mentioned above addition of meltable zinc phosphinates up to 10wt% does not impair the foamability of polyester resin, wherein the mixture of polyester resin, FR and a chain-extending masterbatch is melt blended by using an extruder (preferably a twin-screw extruder). The melt mixture is charged in the extruder with a physical blowing agent and foamed. The foamed polyester resin shows a uniform and fine cell structure. The fire resistance of foamed polyesters can be improved by addition of fusible zinc phosphinates: The foamed material comprising an aromatic polyester resin and 5wt% zinc diethylphosphinate is characterized with a total heat release (THR600s) less than 6.0 MJ, a fire growth rate (FIGRA) less than 430.0 W/s, a total smoke production (TSP600s) less than 165.0 MJ and no flaming droplets/particles within 600s (Example 1). All parameters are tested according to prEN 13823.

The phosphorus content of preferred meltable zinc phosphinates ranges from 10 to 35% by weight, particularly preferably from 15 to 25% by weight.

The fusible zinc phosphinates are incorporated into the foaming equipment in form of powder or granulates. The granulates are manufactured by extrusion compounding of the flame retardants with up to 5wt% wax such as polyolefin or acrylate copolymers.

The chain-extending additives needed for the reactive extrusion process are in general multifunctional compounds selected from one or more of chain-extending/branching ingredients, preferably from a group consisting of tetracarboxylic dianhydride, polyepoxides, oxazolines, oxazines, acyllactams and antioxidant containing sterically hindered phenolic end groups or mixtures thereof.

In foaming processes for production of fire-resistant polyester cellular materials, a physical or chemical blowing agent can be chosen for expansion, while a physical blowing agent is typically selected from carbon dioxide (CO₂), Nitrogen (N₂), ketons, hydrofluorocarbon, a hydrocarbon (such as n-hexane, n-octane, iso-butane, isopentane, cyclopentane and n-heptane) or a mixture of above gases.

A nucleate is generally applied in the foaming process, whereas commonly used nucleate types are talc, TiO₂, MgO, BaSO₄, SiO₂, Al₂O₃, CdO, ZnO, mica filler, fluor polymers, diatomaceous earth or the like alone or in combination.

Beside nucleation and blowing agents, it is also possible to additionally use further additives such as process/thermal stabilizers, fluor-polymers and UV stabilizers etc. in the recipes.

Preferred aromatic polyesters for production of cellular foamed products include those derived from terephthalic acid, isophthalic acid, naphthalenedicarboxyl acid, cyclohexanedicarboxylic acid and the like or the alkyl esters. Particularly preferred is DMT- or PTA-based PET with I.V. of about 0.4 - 1.4dl/g (according to ASTM 4603) including homo- and copolymers.

A process of foaming virgin polyester resins, post-consumer polyester materials or a mixture thereof (to increase for instance the overall molecular weight) in form of granules, agglomerates, powders or flakes is also possible in combination with above said group of flame retardants. The term "post-consumer" is defined as material being brought back into the process - i.e. being recycled - after its prior processing and/or use, e.g. as PET bottles, PET articles, polyester scraps, recycling polyesters.

The process applied for foaming fire-resistant polyesters is in general foam extrusion, wherein an extrusion line is used. The extrusion line for the reactive extrusion foaming of polyester consists basically of an extruder, dosing equipment, gas injector, heat exchanger, static mixer and die for extrudate shaping. The extrusion line is followed by downstream equipment such as puller, conveying rolls with air cooling, sawing unit, further cooling and grinding and packaging etc.

All types of foaming extruders can be used for the reactive foam extrusion in the current invention: single screw or co-/counter-rotating twin screw extruder, tandem extrusion line consisting of a primary extruder (twin or single screw extruder) and a secondary/cooling single screw extruder.

Other foaming processes such as injection molding or batch process are also possible to produce the polyester cellular materials charged with said flame retardants.

This invention is illustrated by the following examples given for illustrative purpose.

### Comparative example 1:

In this example, a co-rotating twin screw extruder having a screw diameter of 75 mm and L/D=32, followed by a static mixer and a strand die, was applied. The foam extrudate underwent a calibration after leaving the strand die to be shaped to a rectangular board. PET copolymer (I.V.=0.78dl/g) was dried at 165°C for 6h and the concentrate, disclosed in Example 4 of European Patent Application 09 006 678.8, at 80°C for 8h. The PET resin composed with 0.3% of PMDA and effectively 0.6% of a nucleating agent each by weight of the total throughput was continuously extruded and foamed at a throughput of 45 kg/h. The mixture was extruded and foaming took place with help of a hydrocarbon as physical blowing agent. The process parameters are listed in **Tab. 1**:

**Tab. 1: Process parameters**

| Feature | Parameter |
|---|---|
| Temperature of feeding zone (°C) | 120-260 |
| Temperature of melting zone (°C) | 280-285 |
| Temperature of metering zone (°C) | 275-280 |
| Temperature of static mixer (°C) | 275-285 |
| Temperature of die (°C) | 285-290 |
| Melt throughput (kg/h) | 45 |
| Gas injection (g/min) | 17.5 |

PET foam material with fine and uniform cell structure was obtained at a foam density of 112kg/m³ and tested for SBI fire classification according to prEN 13823 (s. **Tab. 2**).

### Comparative example 2:

The comparative example 1 was repeated with the difference that the melt system was charged with 2% of a Br/Sb₂O₃ combination containing a brominated diphenyl derivative by weight of total mixture.

The addition of the brominated diphenyl derivative decreased the melt strength and pressure of polyester so much, that no foam was obtainable.

### Comparative example 3:

The comparative example 1 was repeated with the difference that a flame retardant compound (Example 3 of EP0908488) consisting of 3% ethylenebistetra-bromophthalimide and 0.3% sodium antimonate by weight of the mixture was incorporated into the extruder.

PET foam material with fine and uniform cell structure was obtained at a foam density of 113kg/m³ and tested for SBI fire classification according to prEN 13823. The testing results except total heat release and flaming droplets/particles were much worse than the PET foam without any flame retardancy (s. **Tab. 2**).

### Comparative example 4:

The comparative example 1 was repeated with the difference that micronized aluminium tris(diethylphosphinate) in an amount of 1% by weight of total throughput was added into the foam recipe.

However, the addition of aluminium tris(diethylphosphinate) resulted in a decrease in melt strength and pressure of polyester. No foam was obtainable.

### Comparative example 5:

The comparative example 1 was repeated with the difference that 2% oxaphospholane glycol ester by weight of total throughput was added in the foam recipe. The trial showed a decrease in melt strength and pressure. No foam could be produced.

### Comparative example 6:

The comparative example 1 was repeated with the difference that ammonium polyphosphate was added into the extruder in an amount of 1% by weight of total throughput. The foaming process was impaired so much, that no foam is obtainable.

### Example 1:

The comparative example 1 was repeated with the difference that 5% of zinc diethylphosphinate by weight of the total throughput, having a phosphorus content of about 20% (m/m) and a melting point of 200°C, were added into the extruder.

The extrusion process was stable and PET foam with fine and uniform cell structure was obtained at a foam density of 113 kg/m³.

The extruded foam board was prepared for SBI testing and the results of the fire testing are summarised in **Tab. 2.** The testing results show a clear improvement of the fire-resistance of PET foam.

**Tab. 2: Results of SBI fire testing according to prEN 13823**

| Fire testing item | Comparative example 1 | Comparative example 3 | Example 1 |
|---|---|---|---|
| Total heat release (THR₆₀₀ₛ) [MJ] | 19.2 | 18.9 | 6.0 |
| Fire growth rate (FIGRA) [W/s] | 745.38 | 3625.96 | 428.51 |
| Total smoke production (TSP₆₀₀ₛ) [MJ] | 349.1 | 375.3 | 164.0 |
| Max. smoke growth rate (SMOGRA max) [m²/s²] | 106.8 | 772.93 | 108.49 |
| Flaming droplets/particles (within 600s) | d2 | d0 (none) | d0 (none) |

### Example 2:

The comparative example 2 was repeated with the difference that 9% of zinc diethylphosphinate by weight of the total throughput was added into the extruder.

The extrusion process was stable and a PET foam with fine and uniform cell structure was obtained at a foam density of 112 kg/m³.

## Claims

1. A flame-resistant, expanded cellular material from aromatic polyester resins, obtained by extrusion foaming of polyester resins, wherein the polyester foam comprises one or a mixture of fusible zinc phosphinates of the following formula, 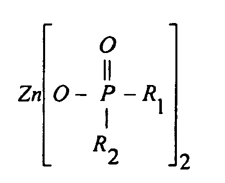 where R₁ and R₂ are identical or different and are hydrogen, C₁-C₁₈-alkyl, linear or branched, and/or aryl, preferably C₁-C₆-alkyl, linear or branched, and/or phenyl, particularly preferably methyl, ethyl, n-propyl, isopropyl, n-butyl, tert-butyl, n-pentyl or phenyl, preferably zinc dimethylphosphinate, zinc methylethylphosphinate, zinc diphenylphosphinate, zinc diethylphosphinate, zinc ethylbutylphosphinate or zinc dibutylphosphinate fusible zinc phosphinates,
wherein the fusible zinc phosphinates have a melting point of 40 to 250°C, preferably a melting point above 200°C and a decomposition temperature not lower than 300°C and has a total heat release (THR₆₀₀ₛ) less than 6.0 MJ, a fire growth rate (FIGRA) less than 430.0 W/s, a total smoke production (TSP₆₀₀ₛ) less than 165.0 MJ and no flaming droplets/particles within 600s, wherein all parameters thereof are tested according to prEN 13823.

2. The expanded material according to claim 1, wherein the polyester resin is an aromatic polyester homo- and/or copolymer having an intrinsic viscosity of 0.4 to 1.4 dl/g, preferably selected from virgin and/or post-consumer resins of PET and/or PBT and/or PEN in form of granules, agglomerates, powders or flakes.

3. The expanded material according to claim 1, wherein the phosphorus content of the fusible zinc phosphinates ranges from 10 to 35% by weight, particularly preferably from 15 to 25% by weight.

4. The expanded material according to any of claims 1 to 3 having a density below 300 kg/m³.

5. A process for production of an expanded material according to claim 1, comprising melt blending of a mixture containing the polyester resin of claim 2 and one or a mixture of fusible zinc phosphinates of claim 1 and an expansion process **characterized by** a decompression induced by a change in thermodynamic state such as pressure or temperature of the melt mixture.

6. An article obtained from the expanded material of any of claims 1 to 4.

7. The use of the material according to any of claims 1 to 4 or the article according to claim 6 as a core such as highly loaded structures (e.g. wagon building, aviation parts, automotive components or construction components) or as thermal and/or acoustic insulation or for building and construction applications or as wall/floor/ceiling/roof panels and/or supports or structural insulation where the flame retardancy is of use.

## Patentansprüche

1. Flammbeständiger, geschäumter Schaumstoff aus aromatischen Polyesterharzen, erhalten durch Extrusionsschäumung von Polyesterharzen, wobei der Polyesterschaum ein schmelzbares Zinkphosphinat der Formel 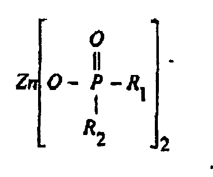 oder ein Gemisch dieser Zinkphosphinate umfasst, worin R¹ und R² gleich oder unterschiedlich sind und Wasserstoff, unverzweigtes oder verzweigtes C₁₋₁₈-Alkyl und/oder Aryl, vorzugsweise unverzweigtes oder verzweigtes C₁₋₆-Alkyl und/oder Phenyl, besonders bevorzugt Methyl, Ethyl, n-Propyl, Isopropyl, n-Butyl, tert-Butyl, n-Pentyl oder Phenyl, vorzugsweise Zinkdimethyl-, Zinkmethylethyl-, Zinkdiphenyl-, Zinkdiethyl-, Zinkethylbutyl- oder Zinkdibutylphosphinat, bedeuten, wobei die schmelzbaren Zinkphosphinate einen Schmelzpunkt von 40 - 250° C, vorzugsweise von über 200° C und eine Zersetzungstemperatur von mindestens 300° C, eine Gesamtwärmefreisetzung (THR₆₀₀ₛ) von unter 6,0 MJ, eine Feuerausbreitungsgeschwindigkeit (FIGRA) von unter 430,0 W/s, eine Gesamtraucherzeugung (TSP₆₀₀ₛ) von unter 165,0 MJ aufweisen und innerhalb von 600s keine Flammtröpfchen bzw. -partikel bilden, wobei sämtliche Parameter nach prEN 13823 getestet wurden.

2. Geschäumter Stoff nach Anspruch 1, bei dem das Polyesterharz ein aromatisches Polyesterhomopolymer und/oder -copolymer mit einer inneren Viskosität von 0,4 - 1,4 dl/g, vorzugsweise ausgewählt unter Neuharz- und/oder Rückführharzmaterial von PET und/oder PBT und/oder PEN in Form von Granulat, Agglomeraten, Pulvern oder Flocken.

3. Geschäumter Stoff nach Anspruch 1, bei dem der Phosphorgehalt der schmelzbaren Zinkposphinate 10 - 35 Gew.-%, insbesondere 15 - 25 Gew.-% beträgt.

4. Geschäumter Stoff nach einem der Ansprüche 1 - 3 mit einer Dichte von unter 300 kg/m³.

5. Verfahren zur Herstellung eines geschäumten Stoffes nach Anspruch 1, das das Mischen eines Gemisches aus dem Polyesterharz nach Anspruch 2 mit einem schmelzbaren Zinkposphinate oder einem Gemisch dieser Zinkphosphinate nach Anspruch 1 in geschmolzenem Zustand und einen Verschäumungsprozess, **gekennzeichnet durch** eine **durch** eine Änderung der thermodynamischen Zustands wie Druck oder Temperatur des geschmolzenen Gemisches induzierte Druckverminderung, umfasst.

6. Erzeugnis, erhalten aus dem geschäumten Stoff nach einem der Ansprüche 1 - 4.

7. Verwertung des Stoffs nach einem der Ansprüche 1 - 4 oder des Erzeugnisses nach Anspruch 6 als Innenlage wie z.B. als hochbelastete Bauteile wie z.B. von Bauteilen für Waggons, Flugzeuge, Kraftfahrzeuge oder in Gebäuden oder als Wärme- und/oder Schallisolierung oder für Gebäude und Bauteile wie Wand-, Boden-, Decken- und Dachplatten und/oder für tragende Teile oder für die Isolierung von Bauteilen, für die Flammverzögerungsvermögen von Nutzen ist.

## Revendications

1. Matériau cellulaire expansé ignifuge réalisé à partir de résines de polyester aromatique, que l'on obtient par transformation en mousse de résines de polyester par extrusion, la mousse de polyester comprenant un phosphinate de zinc fusible ou un de leurs mélanges, répondant à la formule suivante : 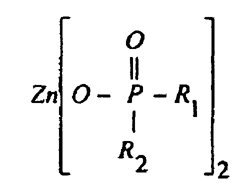 dans laquelle R₁ et R₂ sont identiques ou différents et représentent un atome d'hydrogène, un groupe alkyle en C₁-C₁₈, linéaire ou ramifié, et/ou un groupe aryle, de préférence un groupe alkyle en C₁-C₆, linéaire ou ramifié, et/ou un groupe phényle, de manière particulièrement préférée un groupe méthyle, un groupe éthyle, un groupe n-propyle, un groupe isopropyle, un groupe n-butyle, un groupe tert-butyle, un groupe n-pentyle ou un groupe phényle, de préférence des phosphinates de zinc fusibles tels que le diméthylphosphinate de zinc, le méthyléthylphosphinate de zinc, le diphénylphosphinate de zinc, le diéthylphosphinate de zinc, l'éthylbutylphosphinate de zinc ou le dibutylphosphinate de zinc, les phosphinates de zinc fusibles possédant un point de fusion de 40 à 250 °C, de préférence un point de fusion supérieur à 200 °C et une température de décomposition qui n'est pas inférieure à 300 °C, et possédant un potentiel calorifique total (THR₆₀₀ₛ) inférieur à 6,0 MJ, une vitesse de développement de l'incendie (FIGRA) inférieure à 430,0 W/s, une production de fumée totale (TSP₆₀₀ₛ) inférieure à 165,0 MJ et aucune gouttelette/particule qui s'enflamme dans un laps de temps de 600s, tous leurs paramètres étant testés conformément à la norme prEN 13823.

2. Matériau cellulaire expansé selon la revendication 1, dans lequel la résine de polyester est un homopolymère et/ou un copolymère de polyester aromatique possédant une viscosité intrinsèque de 0,4 à 1,4 dl/g, de préférence choisi parmi des résines vierges et/ou des résines recyclées après consommation de PET et/ou de PBT et/ou de PEN sous la forme de granulés, d'agglomérats, de poudres ou de paillettes.

3. Matériau cellulaire expansé selon la revendication 1, dans lequel la teneur en phosphore des phosphinates de zinc fusibles se situe dans la plage de 10 à 35 % en poids, de manière particulièrement préférée de 15 à 25 % en poids.

4. Matériau cellulaire expansé selon l'une quelconque des revendications 1 à 3, possédant une densité inférieure à 300 kg/m³.

5. Procédé de production d'un matériau expansé selon la revendication 1, comprenant le mélange en fusion d'un mélange contenant la résine de polyester selon la revendication 2 et un phosphinate de zinc fusible ou un de leurs mélanges selon la revendication 1, et procédé d'expansion **caractérisé par** une décompression induite par un changement de l'état thermodynamique, tel que la pression ou la température du mélange en fusion.

6. Article que l'on obtient à partir du matériau expansé selon l'une quelconque des revendications 1 à 4.

7. Utilisation du matériau selon l'une quelconque des revendications 1 à 4 ou de l'article selon la revendication 6 à titre de partie centrale telle que des structures supportant de fortes charges (comme par exemple des éléments de construction de wagons, des pièces d'avions, des composants pour des véhicules automobiles ou des composants dans le domaine de la construction), ou telle que des isolants thermiques et/ou acoustiques ou bien pour des applications de bâtiments et de constructions ou encore sous la forme de panneaux destinés à des murs/sols/plafonds/toits et/ou sous la forme d'isolation pour des supports ou pour des structures, dans laquelle un effet de retardement des flammes est en vigueur.
